# EUROPEAN PATENT SPECIFICATION

(11) **EP 3 214 919 B1**
(45) Date of publication and mention of the grant of the patent: **26.09.2018**
(21) Application number: 15849812.1
(22) Date of filing: 04.11.2015
(51) Int. Cl.: A01G 25/00, A01G 25/02

(54) **CYLINDRICAL EMITTER WITH FILTER AND METHOD FOR INJECTING A FILTER INTO SUCH AN EMITTER**
ZYLINDRISCHE TROPFBEWÄSSERUNGSVORRICHTUNG MIT FILTER UND VERFAHREN ZUR INJEKTION DES FILTERS IN DIE TROPFBEWÄSSERUNGSVORRICHTUNG
DISPOSITIF D'IRRIGATION GOUTTE À GOUTTE CYLINDRIQUE AVEC FILTRE ET PROCÉDÉ DE INJECTION D'UN FILTRE DANS UN TEL DISPOSITIF

(30) Priority: 04.11.2014 GR 20140100552
(43) Date of publication of application: 13.09.2017
(73) Proprietor: Dermitzakis, Emmanuil, 156 69 Papagos, Attikis (GR); Dermitzakis, Aristeidis, 156 69 Papagos, Attikis (GR)
(72) Inventor: Dermitzakis, Emmanuil, 156 69 Papagos, Attikis (GR); Dermitzakis, Aristeidis, 156 69 Papagos, Attikis (GR)
(86) International application number: PCT/GR2015/000056
(87) International publication number: WO 2016/071722

(56) References cited:
- WO-A1-2008/146055
- WO-A1-2009/104183
- GR-A- 20070 100 320
- US-A1- 2010 096 478

## Description

The present invention refers to a cylindrical emitter for irrigation purposes internally welded into a lateral pipe bearing inlet water filter.

### STATE OF THE ART

The emitter, such as disclosed in US20100096478A1, is the most sensitive element of drip irrigation due to its known sensitivity in clogging issues. They are welded internally to pipes during the latter's production phase creating the dripline pipes. The internally welded emitters are divided in two categories: cylindrical and flat (linear) being radically differentiated: The cylindrical emitters are more bulky, are welded exclusively only into pipes of thick wall thickness and thus are intended mainly for multi-seasonal operation (over 15 years) and obviously require meticulous care and maintenance. Therefore they are used: a) for multi-seasonal irrigation applications (tree fields), b) from small-size farmers and family companies, c) from municipalities at urban green applications, d) from hotel complexes, and is generally regarded as a traditional, environmentally friendly multi seasonal application.

The opposite is true for the simple flat-linear emitters e.g. EP 0 535 877 A2 that are very lightweight (almost 1/10^{th} to 1/20^{th} of the cylindrical ones), are welded only into pipes with considerable thinner wall thickness (only 1/10^{th} of the corresponding cylindrical dripline pipe thickness), are by default for single season application (one agricultural season). Due to their low cost, their collection, maintenance, storage and reuse is not profitable and are usually abandoned in the fields with a heavy impact on the environment. They are mainly used for large and extended plantations of one agricultural season and in general they are of completely different technological approach. The dripline pipes are being characterized according to the emitters (cylindrical or linear) that they incorporate within.

All types of emitters i.e. US 4,655,397**,** EP 0501114 A1**,** WO 2010048063 A1 possess a water inlet protection system, in the form of a static screen filter. These filters are comprised by a collection channel with a flat or concave orthogonal surface divided by a large number of thin straight bars-sticks to an equal number of narrow orthogonal openings. The external surface of the filter that develops internally to the cylindrical surface of the emitter is completely smooth. The narrow dimension of the orthogonal openings characterizes the quality of filtering.

The grains of foreign matter are divided in general into three sizes in relation to the openings: the larger (**a**) the smaller (**b**) and the very thin, or dust-grain like ones (**c**).

The sediments are generally divided into three types:
1) the ones that are developed uniformly longwise in the bottom of the pipe due to gravity.
2) the ones that are developed selectively over the openings of the filter. The foreign matter is dragged along by the stream of the water that is divided from the main flow in order to enter in the filter of the emitter, and settle over the openings. It regards the larger matter in relation to the openings (**a**) since the smaller (**b**) and the very thin or dust-grain like (**c**) pass through the openings into the emitter.
3) the ones that are developed uniformly onto the entire inner surface of the pipe and the emitter.

The issue is obviously worsened in case 1), since cases 2) & 3) are unavoidable.

Generally the filter's disadvantage is that while initially it provides protection for the meandering paths, the continual accumulation of larger foreign matter at the inlet is causing a gradual blockage of the narrow orthogonal openings, disrupting the inlet of the water and incapacitates the emitter even though the internal meandering paths of the emitter are still clean and open.

This phenomenon is becoming even greater when the emitter's filter happens to be located onto the bottom of the pipe.

On the case of cylindrical emitters the issues of the filter's clogging is worsened since it is different and more intense in comparison to the flat-linear ones. The cylindrical emitters, being more bulky, the meandering paths are extremely long and develop multiple and spiral recirculation around the periphery of the emitter, in contradiction to the flat-linear where the meandering path is straight and of relatively small length.

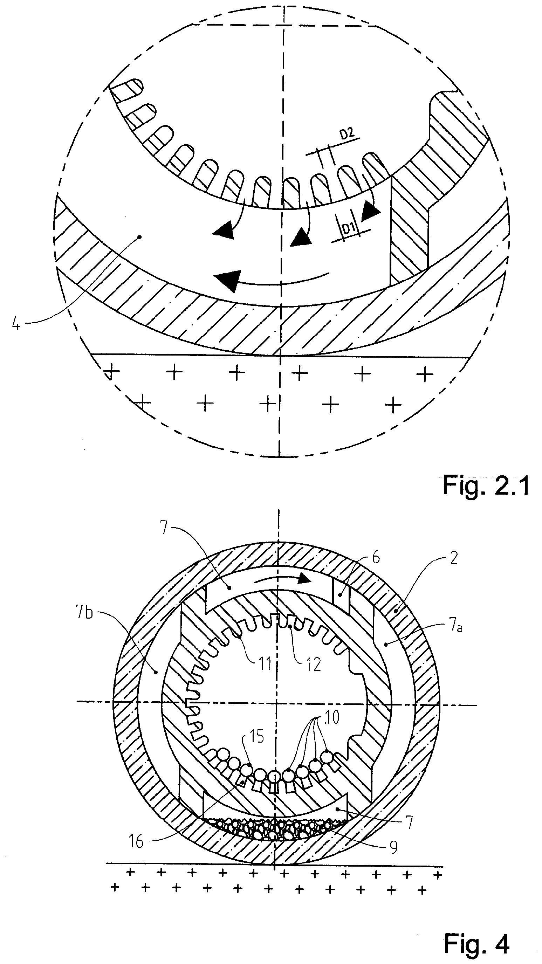

The repeated spiral recirculation and the many directional changes of the meandering paths, and the existence of siphons with alternating high & low points, make cylindrical emitters particularly prone to clogging by grains of type (**b**) as well as by thin and dust-grain like of type (**c**), since these changes benefit the continual settling of sediment at low points (in relation to the bottom of the pipe and to the soil) of the meandering paths. The issue is even further aggravated due to the relatively low water flow velocity within the paths, since their cross-sections are wider in relation to the respective cross-sections of the flat-linear emitters. At **Fig.4** it can be seen part of a typical meandering path-siphon (path "U"-shaped) at a cross-section of a cylindrical emitter with the characteristic sediments being developed at the lowest point of the path independently from the position of the filters relatively to the bottom of the pipe or to the soil. Along with the sediments at the bottom of the meandering path, there are sediments being developed due to gravity in the inner concave surface (lowest point) of the emitter, independently from the position of the filters relatively to the bottom of the pipe or to the soil.

The smaller grains (**b**), and the dust (**c**) are not possible to be retained by the central type common filters of the irrigation grid (hydro-cyclones and battery of screen filters). A solution for these particles is the bulky gravel filter, or the "Imhoff tanks" that have a heavy impact on the total installation cost and are therefore normally neither planned for nor installed to, leaving the installation vulnerable with the known consequences for the multi-season dripline pipes with cylindrical emitters.

The sediments are mixtures from grains of different sizes created from layers of heavier grains that are not blocking initially the cross-section since they allow narrow gaps (porous) between them large enough to sustain a flow. The problem is worsened with the smaller grains and the dust that blocks quickly these gaps (porous) creating a gradually impenetrable "filter cake" and blocking ultimately the inlet.

There is no possibility of any external intervention for the cleaning of the filters apart from the chemical approach (injection of hydrochloric acid, etc.), requiring special installation of an injector at the irrigation supply network, specialized personnel, and increased labor workload burdening the environment and the soil with extremely harmful chemicals. It should be noted that in order for the chemical cleaning to be possible, a minimum flow within the emitter is required.

On the contrary, cleaning is not an economically practical solution, and is not applied to thin walled dripline pipes of a single season and usage bearing flat emitters, (i.e. EP 0 535 877 A2**,** WO 2009/104183**)** which are produced with a completely different approach, i.e. diminishing the production and labor cost and increasing the consumption. In case of clogging, they are completely replaced by brand new ones, while the clogged ones are left behind with environmental consequences. For this reason not much attention is given for their active or passive protection.

The continual sediments from new layers block gradually the smooth inlet of the filter at WO 2010048063 A1 even though that it is considerably raised. It should be noted that the protrusion has certain limits, since it reduces considerably the effective cross-section, increasing the flow resistance, reducing the flow of the water in the pipe.

The invention WO 2009/104183 refers to a completely different type of emitters, the flat or linear ones. It possesses the known plane and straight collection channel incorporating all the orthogonal openings of the filter, bearing vertical shallow secondary channels being extended to great lengths, left and right, crossing the collection channel and forming the openings. Every opening corresponds and relates to a separate secondary channel. All of the aforementioned elements make of the filter while lying on the same plane level. In the case of sediments over the secondary channels new paths should be created for feeding the collection channel effectively.

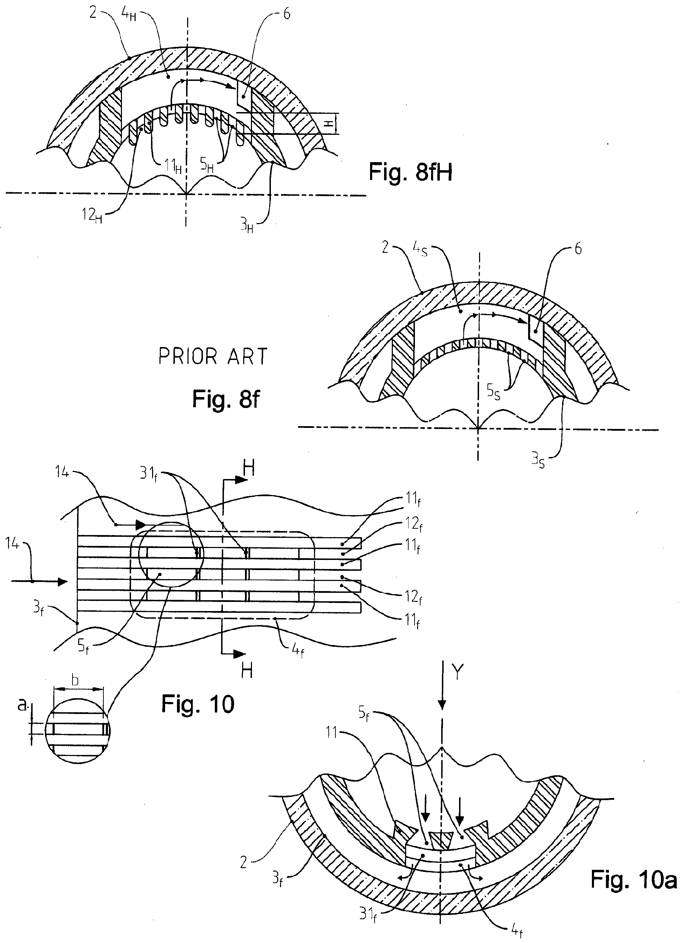

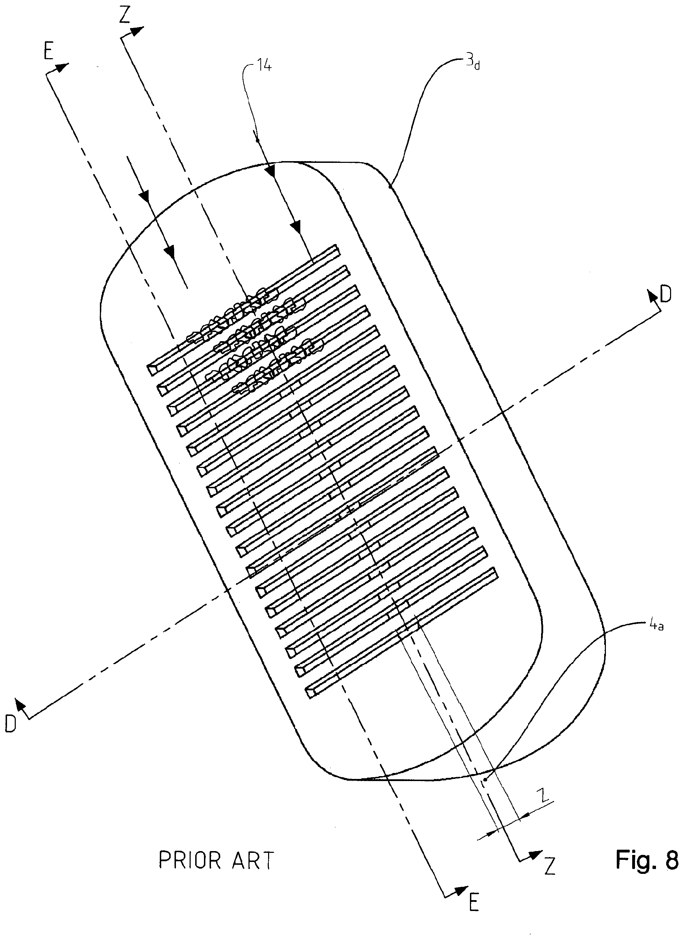

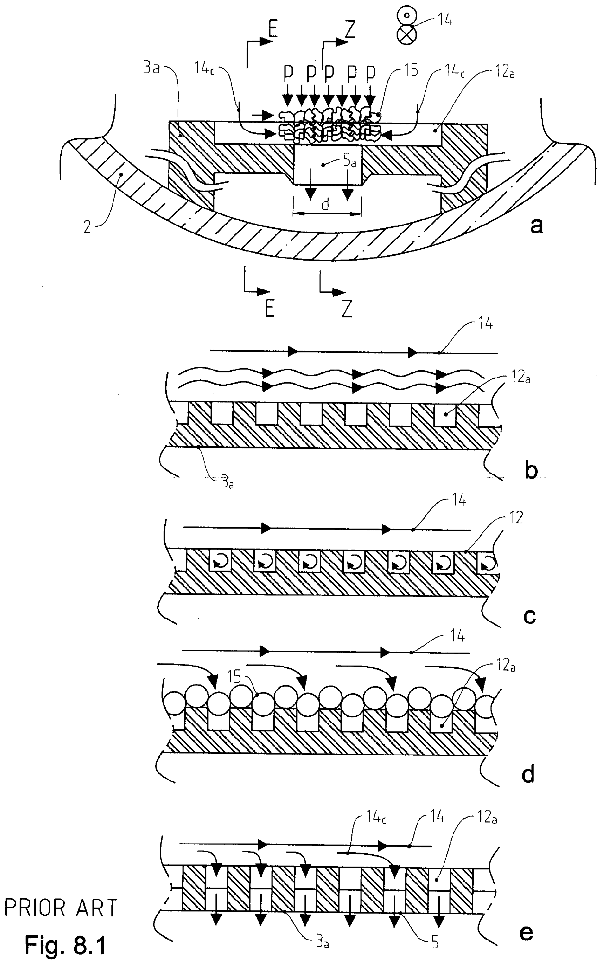

A satisfactory protection solution for the many issues of clogging cannot be given by the aforementioned technologies, since:
The first WO 2010048063 A1 does not provide any special protection, neither for the large nor for the small-thin grains, even though: a) the filter's surface is considerably raised, b) the issue is addressed and focused specifically to multi-seasonal cylindrical emitters. The larger grains shall collect exactly over the orthogonal openings of the smooth surface, shall penetrate partially at a percentage of their volume inside the openings and shall be trapped and agglomerated by the smaller ones, without the possibility of being removed. Another disadvantage is the "de facto" arrangement of the elevated filter parallel to the flow in the pipe and in case it happens to be placed at the bottom of the pipe (in relation to the level of the soil) it increases even further the clogging issues.
The second one, WO 2009/104183 (as described at **Fig.8**, **Fig.8.1a**, **Fig.8.1b**, **Fig. 8.1c**, **Fig.8.1d**, **Fig.8.1e**) does not provide any protection since:
   a) The narrow and long collection channel of the openings is straight and extends along the flow of the water.
   b) The secondary shallow channels that are developed right and left of the collection channel have a direction perpendicular to the flow of the water in the pipe and are closed at their both ends.
   c) The filter and all of its main elements are developed on a horizontal surface and are submerged internally, i.e. without protrusion.

The foreign particles independently of their size will follow the main types of sediments and will cover:
1) uniformly the entire and horizontal surface of the filter with the secondary channels, and
2) selectively and in a greater degree the straight collection channel with the openings, and if it happens to be aligned with the bottom of the pipe, the issue of sediments is worsened.

The grains that settle over the shallow secondary channels block an important part of their cross-section. The narrow free gap initially created on the bottom of the cross-section of the secondary channel should allow for the water to pass through underneath, bypassing the corresponding opening of the collection channel of the filter.

As illustrated at **Fig.8.1a**, **Fig.8.1d** & **Fig.8.1e**, the narrow gaps that would initially be formed below the first foreign matters that would cover the secondary channels along with the collection channel, will not remain open for long. Due to the perpendicular arrangement of the secondary channels relative to the flow of the pipe, the submersion in the bottom surface of the emitter, and the closed ends, no flow at the secondary channels will be occurred, (apart from some small vortices) neither when the emitterr is completely clean nor at the phase of the formation of the above mentioned gaps under the foreign sediments.

At **Fig.8.1b** & **Fig.8c**, is shown that internally to the transversal secondary channels and on the total width of the emitter, vortices are formed that trap and retain any grains (particularly dust) that are present. The trapped grains develop in time an impenetrable "filter cake" flattening and covering completely the secondary channels on the total surface of the emitter, before clogging of the main openings of the collection channel.

Therefore, the main openings of the collection channel will be closed at later stage by the secondary channels that are being especially provisioned and designed to protect them.

The reason, as indicated at **Fig.8.1e****,** is that the only substantial and effective flow of water is the flow moving alongside a narrow strip **Z (****Fig.8****)** that passes exactly over the collection channel and later on is being divided into smaller streams in order to enter the emitter. The rest of the flow in the pipe right and left of the strip **Z,** passes through over the agglomerated grains and with low velocity (laminar flow at the walls of the pipe) and since there is no flow towards the inner of the emitter, is not assisting the movement and removal of the grains being trapped in the secondary transversal channels. Is therefore characterized as "ineffective" for the protection.

Therefore the narrow gaps ("bypass") that are initially being formed under the grains sediment right and left of the zone **Z** shall close, since there is no force or flow capable of removing the foreign particles.

The only force that would be capable of moving them along with the flow of the water in the pipe and effectively removing them from the emitter, is the pressure force developing at the "points of zero velocity", when the flow hits a particle and the velocity is nulled (Bernoulli principle).

In order for this pressure force to be more effective, it has to be acting over every grain separately and the grain to have the maximum surface area possible against the flow and the pathway to be available towards the direction of the flow for the grains to be removed.

These requirements are not met, since:
1) the foreign particles due to their irregular shape and variety of dimensions, are located submerged internally to the transversal secondary channels at a large percentage to their volume, and thus having neither their total frontal surface against the flow nor any available pathway towards the direction of the flow for their effective sliding and removal,
2) the grains are settling at the same time on all of the secondary channels and at their full length right and left of the collection channel, covering the total surface of the emitter. Hence the pressure force (Bernoulli) towards the direction of flow, will not be exerted on every grain separately, instead only on the first one of every row, therefore the force will be distributed along the row, and as such will be not effective. See **Fig.8.1d** & **Fig.8.1e****.**

More over the particles of very small dimensions (dust, sand) being covered entirely within the secondary channels (where the pressure force is "de facto" not possible to be exerted onto them) are not able to be removed.

The only case where a pressure force could be exerted upon trapped particles at the secondary channels is when the openings and the collection channel, i.e. zone **Z,** are also covered from foreign particles. Then, as illustrated at **Fig.8.1a**, there will be an "underneath" water flow **14c** simultaneously from both sides of the filter openings. But even in this case the particles will be compressed one next to the other without being able to be removed.

As a result flow and motion is not present within the secondary channels right and left of the zone **Z,** while on zone **Z** exist: a) vortices before any covering takes place **(****Fig.8.1c****)** and b) a short-lived "bypass" after the covering. Hence the passage from the zone **Z** will close in time, and thus the only "effective" zone, the narrow zone **Z** over the openings, is also ineffective.

Another disadvantage shown at **Fig.8.1a** is that the flow **14c** that is divided in case of clogging in order to move underneath, right and left towards the opening, shall change level to lower further reducing its speed.

Another important disadvantage is the flat and plane arrangement of the filter, that in case it is located at the bottom of the pipe, horizontally or at least with a small inclination in relation to it, the sediments will totally cover in short time symmetrically and absolutely the surface of the filter and especially the zone **Z.**

An additional disadvantage of the above technology is the fact that the secondary channels are developing over the external surface of the emitter, increasing its height and reducing the available cross-section for the passing through of the water. Moreover, the development of vortices increases the resistance and the pressure drop of the flow.

The technology described in US 6027048A is somehow very similar. Its filter is also referred exclusively to flat-linear emitters, while there is not exactly the known long collection chamber of multiple openings. Instead a unique small inlet hole exist supplied by two larger symmetrical channels and the secondary channels are once again submerged to the plane level, closed at both ends, and perpendicular both over the flow of the water in the pipe and to the larger symmetrical channels. As such the foreign particles being gathered over them, one behind the other, are unable to be removed away from the perpendicular larger channels that they feed, and in general from the area of the filter and the emitter, since: the secondary shallow channels end on these two larger channels that are closed feeding the water towards the unique inlet hole of the emitter.

Additionally the perpendicular to the flow arrangement of the secondary shallow channels, is trapping here the foreign particles too and is not allowing the pressure forces (Bernoulli) to be developed at the areas of zero velocity of the flow to move them (roll & slide them) and subsequently to remove them. Furthermore, as far as the restriction of the inlet of the very thin grains (dust) is concerned, the system does not offer any real protection.

The issue of clogging due to the development of "filter cake" of foreign particles over the filter, is intense and there are technologies developed for the automatic active opening of gaps through the impenetrable "filter cake" of sediments, as i.g. WO 2008146055 A1.

As far as the EP 0501114 A1, US 5,609,303, US 4,655,397, are concerned, the collection channel of the filter with the multiple openings is developed peripherally on an arc over the internal smooth concave surface of the emitter without being protruding beyond the smooth surface of the filter and with the absence of secondary shallow channels. The filter traps the foreign particles directly at the multiple openings reducing gradually their cross-section.

At these systems the mold is equipped with a smooth cylindrical core in order to form the inner smooth cylindrical surface of the emitter. The core is pulled in an axial direction during the ejection and then the two main and opposite facing plates of the mold open up forming both the external surface of the emitter with the water meandering paths as well as the multiple filter's openings.

Therefore the forming of these openings is being done by removing the two opposite facing plates of the mold, and thus the side walls of the openings are necessarily parallel to the direction of the motion and in addition the collection channel is not possible to be formed onto the periphery of a complete circle or at least on an angle of 330°.

In the best case scenario the filter is comprised of two discrete opposite groups of openings being arranged on strictly limited arc length right and left to the vertical plane (symmetry plane) of the emitter's cross-section **(****Fig.8f****)** and are communicating between them by an intermediate peripheral channel without openings arranged on the same cross-section. The side walls of the openings due to ejection reasons cannot be in a radial or convergent arrangement. The latter causes several issues, since on one hand it limits the area (arc) of development of openings and on the other it creates irregular and different cross-sections for the openings. (It must be noted that the arc of their development extends on an angle lower than 90°. See **Fig.8f****)** .

### SHORT DESCRIPTION OF THE INVENTION

The cylindrical emitter is internally welded into the lateral pipe and bears a filter at the water inlet with capabilities of passive self-protection from clogging by foreign particles. The filter bears a collection channel developing peripherally at the internal concave surface of the emitter and at an arc of considerable length. The collection channel includes a large number of orthogonal openings along with vertical shallow channels extending to a considerable length on both sides of the collection channel crossing over it perpendicular forming the orthogonal openings.

On every orthogonal opening of the collection channel corresponds a shallow channel, the shallow channels are parallel to each other and to the flow of water in the pipe, are preferably slightly raised over the internal concave surface of the emitter and preferably open at both ends.

The flow in the shallow channels is continuous, feeding continually the collection channel independently for the surface of the orthogonal openings being covered or not from grains of foreign particles. In case the flow due to this covering is disturbed, the gaps at the bottom of the shallow channel that are created under the over-sitting grains, feed underneath the orthogonal openings bypassing the foreign particles, continuing without disturbing the flow in the emitter.

The water from the pipe enters the space of the collection channel of the water inlet filter through the large number of orthogonal openings. From that point forward the water passes over to the meandering path, through an internal opening where it undergoes a predetermined pressure drop in order to finally exit with a low discharge on the soil through a hole created on the pipe corresponding at the end of the meandering path.

The orthogonal openings of the collection channel are aligned preferably to their longer side towards the flow of the water in the pipe.

In another variation the surface of the filter is developed over the internal concave surface of a part of the emitter of a considerable width that is raised in the concave surface of the emitter.

In another variation the side walls of the shallow channels are cut-off at the area over the collection channel, having the capability of bending their free ends that are created. The bending is being done internally towards the collection channel, caused automatically due to the hydraulic overpressure exerted over the collection channel in case of complete blockage of the orthogonal openings. Alongside the bending is creating a semi or instantaneous gap, reinstating the water flow in the emitter.

In another variation the emitter is linear, the filter is developed over a concave surface of considerable arc length of the linear emitter and the shallow channels are aligned with the direction of the flow of the water in the pipe.

The filter is formed by the engraving of longitudinal, shallow and preferably radial channels over the cylindrical core of the mold that shapes also the internal cylindrical surface of the emitter. The cylindrical core at the process of engraving: a) is rotating continually each time under a specific angle related to the "pitch" of the peripheral filter openings and is engraved with the vertical motion of the engraving tool gradually and radially to the entire or to a significant length of the arc of the inner emitter's/core's periphery, or b) remains still and is engraved by the vertical motion of the engraving tool, where if it is single, moves sideways one step at a time, or if it is a multiple one, with just a single vertical motion.

The engraved shallow channels of the core are being filled during the injection of plastic material, are related and corresponds to the side walls of the shallow channels of the filter.

### DESCRIPTION OF THE DRAWING

**Fig.1** illustrates in respective cut and spread out form the outer cylindrical surface of the emitter of the present invention with a meandering path of the state of the art.
**Fig.2** illustrates the longitudinal cross-section of the cylindrical emitter of **Fig.1** welded into the pipe with the side walls of the filter's shallow channels in the internal concave surface of the emitter.

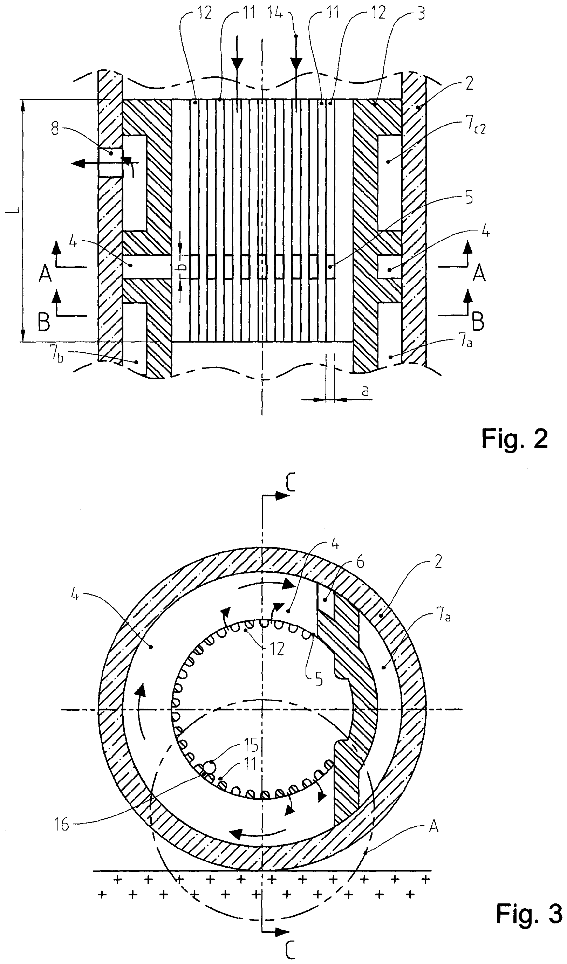

**Fig.2****.****1** illustrates a detail **A** of **Fig.2****.**

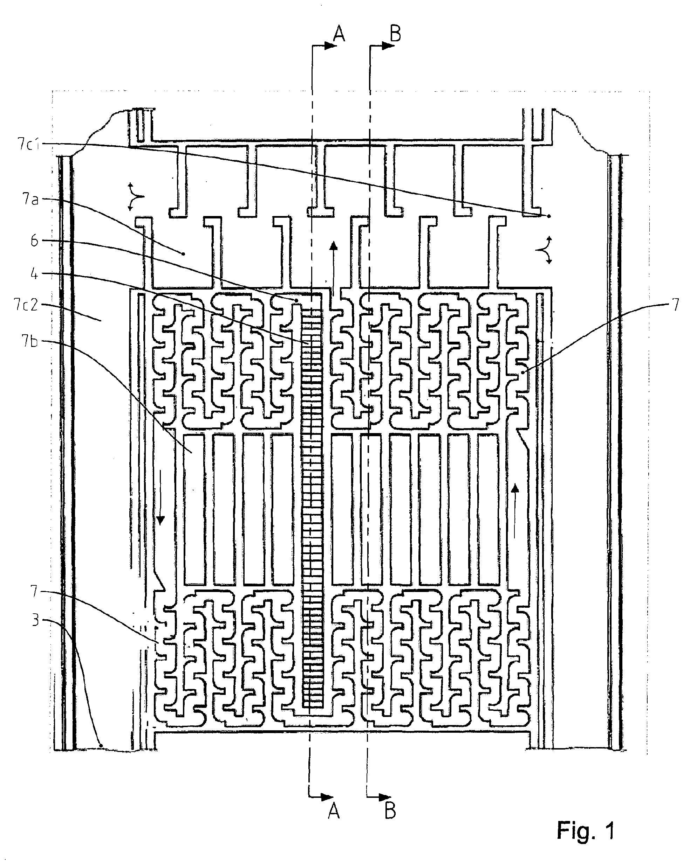

**Fig.3** illustrates the cross-section **A-A** of **Fig.1** & **Fig.2**.
**Fig.4** illustrates the cross-section **B-B** of the meandering path of the cylindrical emitter of **Fig.1** & **Fig.2** with the sediments of foreign particles at the bottom of the meandering path (lowest point).

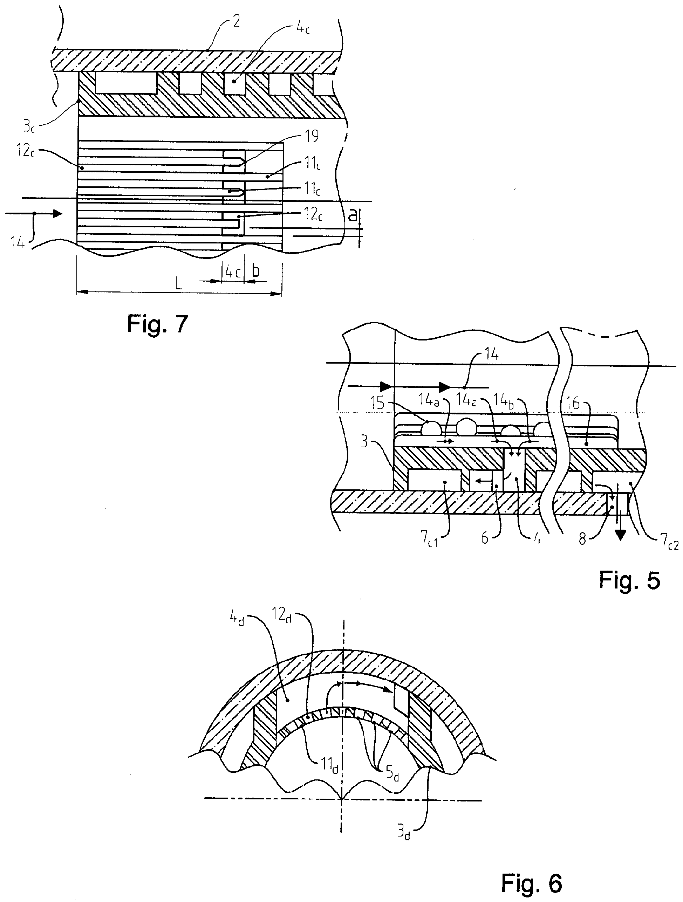

**Fig.5** illustrates the cross-section **C-C** of the cylindrical emitter of **Fig.3** with parts of the filter at the bottom of the pipe (lowest point) and the sediments of foreign particles.
**Fig.6** illustrates a cross-section of cylindrical emitter of the present invention where the shallow channels of the filter are not raised in relation to the internal concave surface of the emitter.
**Fig.7** illustrates a cross-section of a cylindrical emitter where the site walls of the shallow channels of the filter are cut-off at the area of the collection channel, having the capability of bending.
**Fig.8** illustrates the surface of the flat filter of a linear emitter of the state of the art with the shallow channels of the filter perpendicular to the flow of the water in the pipe, and being submerged in the flat surface of the emitter.
**Fig.8.1a** illustrates the transversal cross-section **D-D** of the filter of the state of the art of **FIG.8** in the phase where the openings are covered by grains.
**Fig.8.1b** & **Fig.8.1c** illustrate the cross-section **E-E** of the filter of the state of the art of **Fig.8** & **Fig.8.1a** with the flow as it is developed in cases of laminar and turbulent flow respectively.
**Fig.8.1d** illustrates the cross-section **E-E** of the filter of the state of the art of **Fig.8** with the foreign particles covering the entire surface and are developed at continual rows one behind the other along the flow of the water in the pipe.
**Fig.8.1e** illustrates a cross-section **Z-Z** of the filter of the state of the art of **Fig.8** & **Fig.8.1a** in the phase where the flow is divided entering trough the orthogonal openings into the emitter.
**Fig.8f** illustrates the cross-section of an emitter with internal smooth filter of the state of the art occupying an arc of limited length of the internal surface and the opening's side walls being parallel to each other.
**Fig.8fH** illustrates a cross-section of an emitter of the present invention combining the internal smooth filter of an arc of limited length of the state of the art with the shallow channels and the side walls protruding vertically over the collection channel.

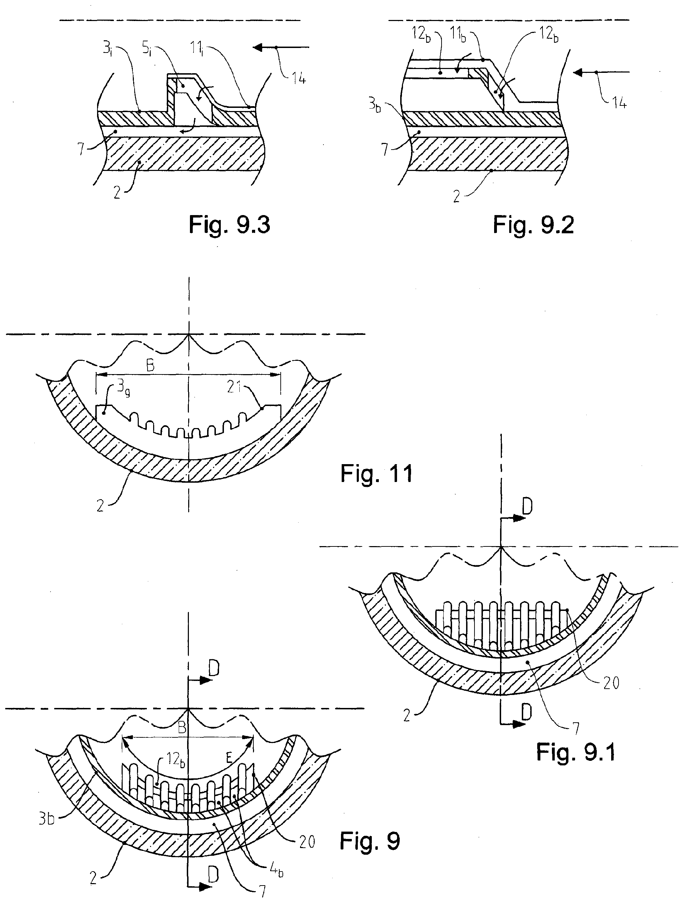

**Fig.9, Fig.9****.****1** illustrate transversal cross-sections of a cylindrical emitter of the present invention where the surface of the filter develops and protrudes over the concave or the flat surface respectively of a raised part of considerable width and height.
**Fig.9****.****2** illustrates the cross-section **D-D** of **Fig.9, Fig.9****.****1****.**
**Fig.9****.****3** illustrates a cross-section of an emitter of the present invention where the filter develops over an inclined surface.
**Fig.10** illustrates another variation where both the collection channel of the filter and the shallow channels develop along the flow direction. The design illustrates a view of the internal concave surface of the emitter at the direction **Y** of **Fig.10a****.**
**Fig.10a** illustrates the cross-section **H-H** of **Fig.10****.**
**Fig.11** illustrates a cross-section of linear emitter of the present invention where the filter develops over a concave surface of the emitter.

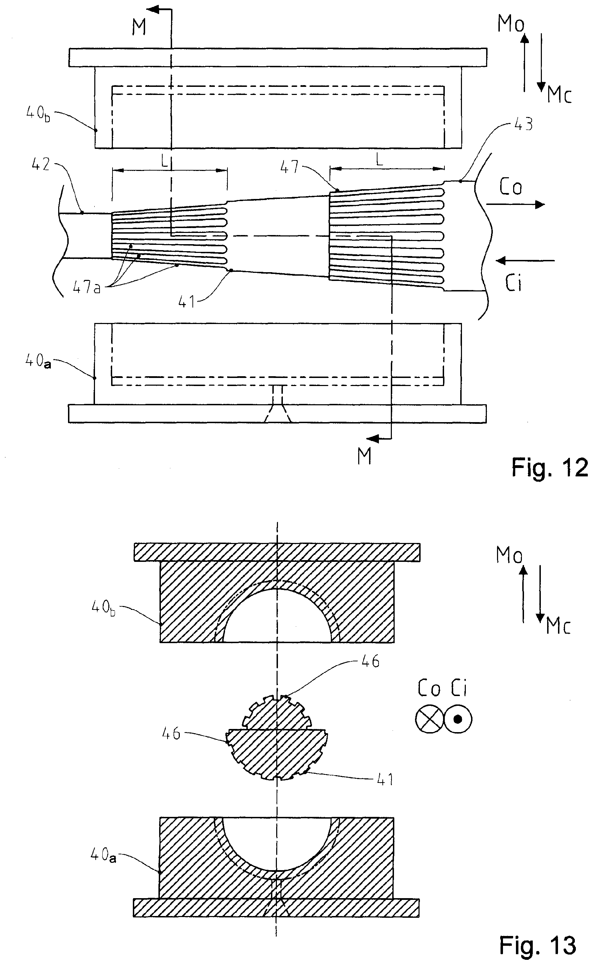

**Fig.12,13** illustrate a view and cross-section respectively of a mold for the forming of the filter of the present invention.

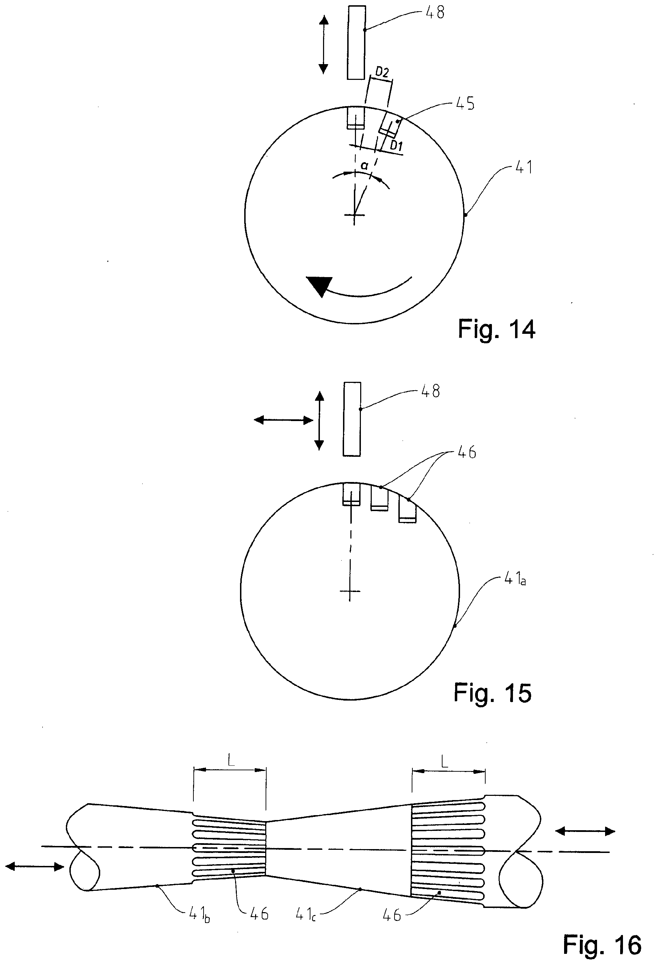

**Fig.14** illustrates a detail of the engraving of the core of **Fig.13****.**
**Fig.15** illustrates a detail of a variation of the engraving of the core of **Fig.13****.**
**Fig.16** illustrates a variation of **Fig.12,13** where the core consists of two parts.

### DETAILED DESCRIPTION OF THE INVENTION

**Fig.1****,****2****,****2****.****1****,****3****,****4****,****5** illustrate a cylindrical emitter **3** welded into the pipe **2** with a peripheral filter at the water inlet. The water moves in the pipe **2** and enters in the area of the collection channel **4** of the inlet filter through a plurality of openings **5.** From the channel **4** and through the path **6,** it passes to the meandering path **7,** where the water undergoes a predetermined pressure drop. From there it passes through the longitudinal wide zone **7a** to one of the peripheral rings **7c1** or **7c2** and finally exits with a low discharge on the soil through the exit hole **8** of the pipe.

The collection channel **4** of width **b** includes a large number of consecutive openings **5** of orthogonal cross-section **a*b**, being developed peripherally onto the internal concave surface of the emitter and onto an arc of considerable length that could cover an angle up to **330°.** The filter could be divided in two facing groups of collection channels connected together through an intermediate channel (not drawn).

The openings **5** are arranged preferably along the large dimension **b** towards the direction of flow **14** of the water in the pipe being formed by the shallow channels **12,** extending to a considerable length **L** front and back of the collection channel **4.** More specifically, the openings **5** are formed between the consecutive side walls **11** of the shallow channels **12** and the collection channel **4** which they cross over it perpendicularly. On every opening **5** of the collection channel **4,** corresponds a shallow channel **12,** all the channels **12** are parallel to each other, as they are similarly parallel to the flow **14** of the water in the pipe and preferably are raised over the internal concave surface of the emitter **3.**

The local protrusion of the shallow channels **12** causes the minimum reduction of the free cross-sectional of the pipe for two reasons: on one hand is their limited length **L** since they are so effective that do not require to take over the entire length of the emitter, and on the other hand is their orientation in relation to the direction **14** of flow of the water in the pipe. Supposedly the mean width **a** of the cross-section of the shallow channel **12** is the same with the width of the side wall **11,** then the reduction of the free cross-section is half in relation to the respective of the state of the art where the channels are perpendicular to the flow **14** in the pipe.

For comparison and in contradiction, **Fig.8** illustrates the shallow channels of WO 2009/104183 that are perpendicular towards the flow **14,** are submerged with closed ends internally to the surface of the emitter restricting the flow with their entire frontal surface, as illustrated in cross section (**Fig.8.1a**) perpendicular to the flow **14**.

The sizes of the grains **15** are divided, as already described, in three categories: (**a**), (**b**) & (**c**).

As far as the sediments are concerned they are categorized as follows:
1) Sediments **10** developing along the bottom of the pipe and are caused due to the gravity component. See **Fig.4****.**
2) Sediments that are gathered selectively over the openings **5** of the filter and are caused by the foreign particles **15** that are dragged along from the stream **14a** of the main flow **14** of the water that is detached in order to enter into the emitter through the openings **5.**

**Fig.4** illustrates an additional issue of cylindrical emitters (in comparison to the linear ones) the sediment internally to the emitter and more specifically at the bottom of the meandering path **7,** obviously from grains of sizes (**b**) & (**c**). The meandering path **7** of these emitters is of extremely long length which is developed peripherally with alternating high and low point and continual siphoning (typical case of "U" shaped pipe). See **Fig.1****.**

The worst combination happens when a part of the collection channel **4** with the opening **5** is led at the bottom of the pipe **2.**

Furthermore, even in this particular worst case scenario, the sediment **10** is not possible, due to the development of the collection channel **4** onto an arc of considerable length, to cover the terminal openings **5** that are developed diametrically opposite to each other.

**Fig.5** demonstrates the operational mechanism of the passive self-protection system. The flow at the shallow channels **12** is continuous and feeds continuously the collection channel **4** and the openings **5** even when the surface of the openings **5** and the collection channel **4** is covered by grains of foreign particles, as it is described later on.

In case where the surface is covered by foreign particles and the flow is disrupted, the shallow channels **12** feed again continuously, not from the surface, but underneath with the aid of a "bypass" through narrow gaps **16** that are created at the bottom of the shallow channels **12** under the grains **15.** The mechanism of passive self-protection and the capability of self-cleaning differs considerably and for many reasons from the state of the art.

In case that, large (**a**), or medium size (**b**) grains **15** are gathered over a shallow channel **12,** due to their arrangement parallel to the flow **14,** and the small gaps **16** that are created between the bottom of the channel **12** and the overlying grains which allows an underneath water flow, a continuous and smooth fluid sublayer is created under the grains alongside the shallow channel **12** that permits a continual rolling and sliding of them, causing ultimately their rejection at the open ends of the shallow channel. The grains during their continuous moving and rolling are neither changing any path levels, nor they face any resistance by construction elements (walls or bars) or any recess or sink at the bottom.

Due to the fact that there is intense and continuous water flow not only in the gap **16** under the grains but over them as well, which is caused exactly on the fact of the parallel arrangement itself in relation to the flow **14,** the grains "roll" or "slide" constantly on the shallow channels, pushed from the pressure forces exerted on their frontal surface by the flow at the points of "impact" and zero velocity conditions (Bernoulli principle). This force, in contradiction to the state of the art, is exerted on every single one separately, thus removing and rejecting them one by one from the open ends of the channels **12.**

In case a grain (**a**) remains partially stuck inside one of the shallow channels **12,** the gap **16** between the bottom of the channel and the overlying grain **15** shall remain open for the free passage of the water and shall not be blocked by dust (**c**), since dust at the channels **12** does not remain still, but moves around constantly along with the flow, until it is completely removed from the emitter.

In case the cross-section **16,** is blocked completely, the pressure force according to the Bernoulli principle will be exerted immediately at its maximum (on the entire frontal surface of the grain) thus removing it. This pressure force, due to the continuous motion, will act upon every single grain separately, and not to a immobilized row (it will not be allocated or weakened).

An additional advantage as illustrated in the figures is the cross-section of the channels that could be of trapezoidal "Δ" shape with narrower top **D₂** in relation to the base **D₁**. This fact on its own ensures thinner cross-sections (mesh) of filter openings **5** and double security for cylindrical emitter **(****Fig.4****)** since the grain cannot stick and block the inlet into the emitter.

It is obvious that the gaps **16,** due to the trapezoidal cross-section "Δ" of the channels, are way too narrow in comparison to the cross-section **b*a** of the openings **5** of the filter (see **Fig.2****.****1** where **a=D₂/2).**

In contradiction, rolling, or fluid sublayer for sliding cannot exist in WO 2009/104183 due to the perpendicular arrangement of the shallow channels in the flow, and the gaps **16** that will be initially created will not remain open for long. Additionally the shallow channels could bear for construction and ejection purposes only parallel to each other side walls. For ejection limitations the "Δ" shape cross-section is impossible to be formed in the flat emitter's mold.

**Fig.8.1b** & **Fig.8c** of WO 2009/104183 is shown that in the internal of the transversal secondary channels of the state of the art and for the entire width and surface of the emitter **3a,** even before the sediments occur, the flow is either passing freely over (laminar) or creates eddy currents (turbulence). Thus the grains in all of the cases are immobilized flattening and diminishing the secondary channels.

Even if there is an underneath motion of water **14c** (see **Fig.8.1a****),** this might be caused only under the grains that are gathered over the openings **5a** (zone **Z**) and more specifically simultaneously in both inlets left and right of the collection channel **4a** and the opening **5a.** This motion is perpendicular to the direction of the flow **14,** and compresses and immobilizes the gathered grains **15** exactly over the openings **5a.** In addition, due to the water motion **14c** under the grains **15,** a sub pressure is created locally (Bernoulli) and as a result the grains are pressed and held over the emitter and are immobilized even further.

**Fig.8.1a** & **Fig.8.1d**, of the state of the art show the grains **15** permanently stuck and arranged in rows on the entire surface of the emitter and along the water flow **14,** weakening the pressure force (Bernoulli) which is acting only on the first grain of every row, and more specifically on the part only of the frontal surface that protrudes over the side wall of the channel **12a.**

**Fig.8f** illustrates a cross-section of an emitter **3f** with an internal smooth filter of the state of the art that occupies a short length of the arc and the side walls of the openings **5s** are parallel to each other. It is clear that sliding and rolling in this case cannot occur.

Rolling & sliding cannot occur neither in case where the filter with openings develops over a smooth surface, even though that the collection channel of the openings is aligned towards the direction of the flow, (i.e. WO 2010048063 A1) irrespectable of how high this might be, since the fluid sublayer under the grains in this case is completely missing, and the grains "stick" and are sacked and held on the surface of the filter as they lay directly over the openings **5a** and are entering into them. The same occurs and at EP 0501114 & US 5,609,303 despite the fact that the collection channel which is not raised is developing on an arc.

In **Fig.5** the flow **14a** that is being detached from the main flow **14** in order to enter into the opening **5**, drags along some grains. More specifically, grains of dimensions (**b**) & (**c**) in case of clean openings **5,** and only (**c**) ones in case of the covering of the openings by other grains. The grains due to the continuous flow and motion are driven continuously away from the area of the filter and from there towards the end of the pipe **2,** where they are gathered and are finally removed in predetermined time intervals through a seldom opening of the ends of the pipe **2** before irrigation starts.

It is obvious that the stream **14a** detached from the flow **14** in order to enter into the opening **5** and the emitter, will follow the direction of the water flow **14** in the pipe. Opposite flow to **14a** (flow line **14b** in **Fig.5****)** at the same time and together with the flow **14a,** cannot exist (in order to trap permanently the grains **15** over the openings **5** and over the emitter "pressing" them simultaneously from both front and back as in state of the art). As far as the sub pressure is concerned, created under the grains by the underneath passing current **14a**, it cannot hold them on the openings **5** since the shallow channel **12** a) has the direction of main flow **14**, b) there is a permanent smooth fluid sublayer, c) the motion of grains is continuous and d) a reverse flow **14b** is impossible.

The above is in contradiction to the technologies of the state of the art, WO 2009/104183, **Fig.8.1a****.**

In addition, the orientation of the shallow channels **12** being aligned to the direction of flow **14,** seeing that it is not reducing considerably the free cross-section of the pipe **2** at the area of the emitter, allows the channels **12** to become even deeper by increasing the height **H** of the side walls **11** ensuring deeper orthogonal or trapezoidal cross-section for the "underneath" passing by of the water in case that the surface of the filter is fully covered by grains.

**Fig.2****.****1** shows the trapezoidal "Δ" shaped cross-section with the top-opening **D₂** being narrower in comparison to the bottom **D₁** one, due to the convergence of the side walls **11.** The relation holds: **D₂/D₁≤1.**

**Fig.6** illustrates a cross-section of the emitter **3d** of the present invention where the shallow channels **12d** are not raised beyond the internal concave surface of the emitter and the side walls **11d** are developed within the internal concave surface. The trapezoidal cross-section "Δ" of the openings **5d** is obvious.

**Fig.7** illustrates another variation of a cross-section of a cylindrical emitter **3c** where the side walls **11c** of the shallow channels **12c** are, either cut-off, or connected with very thin joining parts **19** with the opposite peripheral side walls of the collection channel **4c.** The cutting off of the side walls could be at any point inside the collection channel **4c,** while the new gaps formed, are the same or narrower compared to the already narrow mean dimension "**a**" of the main openings **5c**.

With this variation the capability of the bending of the free parts of the side walls **11c** of the shallow channels **12c** is achieved and is caused automatically in the area of the collection channel **4c,** due to the higher hydraulic pressure exerted over the collection channel **4c** in case of total covering or clogging of the openings **5c** ("filter cake"). At the same time along with the bending a partial or instantaneous rearrangement of the grains is caused and gabs between them are formed, reinstating the water flow in the emitter.

**Fig.8fH** illustrates the cross-section of an emitter **3_{H}** of the present invention where the internal (smooth) filter of short and limited arc of the state of the art (see **Fig.8f**) is combined with the shallow channels **12_{H}** and the side walls **11_{H}**. The common arrangement is being raised vertically over the collection channel **4_{H}** as an extension of the thin straight bars of the filter of the state of the art protruding internally to the emitter. In this case the side walls **11_{H}** of the openings **5_{H}** are preferably parallel to each other and of greater depth **H.**

**Fig.9, Fig.9****.****1****,** **Fig.9****.****2****,** illustrate variations in cross-sections of cylindrical emitter **3b** where the surface of the filter develops over the concave (**Fig.9**) or the flat (**Fig.9****.****1**) surface of a part **20** of considerable width that is significantly raised beyond the rest of the concave surface of the emitter, and the shallow channels **12c** and their side walls **11b** have the direction of the water flow in the pipe and are also preferably extended beyond the raised part **20.** The shallow channels **12b** could be formed also on the inclined side surface of the raised part **20** while the side walls **11b** extending to a considerable length on the concave internal surface of the emitter, could be parallel to each other or radially arranged.

The raised parts of considerable width internally to the cylindrical emitters are a characteristic of the special emitter of self-compensating water discharge (Pressure Compensated, or PC) since in the internal of these raised parts are placed the elastic membranes and the system of the self-compensation. Raised parts are also present to the emitters of WO 2010048063 A1**.**

**Fig.9****.****3** illustrates a cross-section of an emitter **3i** of the present invention where the filter **5i** develops both to the flat-horizontal as well as to the inclined surface, while the side walls **11i** that may extend to a considerable length over the concave internal surface of the emitter, could be parallel to each other or even converging (radially).

**Fig.10, Fig.10a** illustrate another variation where the collection channel **4f** (inside of an orthogonal outline of dashed lines) of the filter develops not peripherally, but along the direction of the main flow **14** and parallel to the shallow channels **12f** with the protruding in this case side walls **11f.** In **Fig.10** a view of the internal concave surface of the emitter **3f** at the direction **Y** of **Fig.10a** is shown, while **Fig.10a** is the cross-section **H-H** of the **Fig**.**10**.

At specific intervals could be optionally thin transversal bars **31f** crossed and joined with the side walls **11f.** The grid that is formed from the bars **31f** and the side walls **11f** ensures a controlled elasticity and bending of the extended side walls **11f.** This elasticity and bending allows in case of total covering and clogging of the openings **5f** (cross-section: **a*b**), partial or instantaneous passage, reinstating the water flow similar to the case of **Fig.7**, due to the higher hydraulic pressure caused automatically in case of clogging. Alongside with the bending there could be a sideward motion of two consecutive side walls **11f** under the pressure of the overlying foreign particles (due to them being stuck) expanding momentarily the small dimension "**a**" of the surface of the cross-section of the opening **5f** of the grid, disturbing the continuity of the layer ("filter cake") of the foreign particles, reinstating the flow.

**Fig.11** illustrates another variation of a cross-section of linear emitter **3g** of the present invention where the filter develops over the concave surface **21** of the linear emitter and the shallow channels **12** have the direction of the water flow in the pipe.

**Fig.12,13** illustrate in a plan view and cross-section **M-M** respectively a mold for the formation of a new filter. The mold of cylindrical emitters is comprised in general from three main parts: the two plates **40a** & **40b**, fix and movable respectively, where it is engraved the outer cylindrical surface of the emitter **3,** and the internal core **41** that forms the internal concave surface. The pictures illustrate the plates open and the core **41** at closing position but parallel shifted (for illustration purposes). For the closing and the injection, the movable plate is moving towards the center and direction **Mc** covering the core **41.** For the opening and ejection, the core is pulled (axial motion in the direction **Co)** and afterwards or even simultaneously the movable plate **40b** is opened and the part is ejected.

**Fig.14** illustrates a detail of a variation of the engraving of the core. The engravings for the forming of the new filter, i.e. the side walls **11** creating the openings **5,** are being done by engravings (**47, 47a**) onto the convex surface of the core. The core is comprised from the slightly conical main part that forms the concave surface of the emitter and is located in the center, and from the cylindrical parts **42** & **43** at both ends for its supporting by the pulling.

The engraving of the shallow channels **45** creating the side walls of the channels of the filter, is being done by cutting tool/blade **48** with parallel side walls which is always orientated so that at every step/pitch to be aligned to the radius of the core. The cylindrical core during its engraving is rotated preferably constantly and at specific angle **α°** each time corresponding to the pitch of the peripheral openings of the filter, and is engraved with the vertical motion of the cutting tool, gradually and radially, to the entire, or at a large arc of the periphery of the emitter.

With this configuration the shallow channel **12** that is formed by the injection, presents a trapezoidal shape "Δ" and is narrower at its external surface, with the opening **5** to achieve two stage filtration, and the filter to become even more thinner and more effective. This configuration limits drastically the partial penetration of foreign particles in the shallow channel **12** maintaining the opening **16** open.

The core may bear at the end of its conical part an also conical shaped surface **47a** where there may also exist engravings for a second arrangement of a collection channel **4** and new openings **5.** These engravings over the surface **47a** create the side walls **11d** of the channels of the filter that are developed internally of the emitter **3d** and are not protruding internally, as described in the **Fig.6****.**

**Fig.15** illustrates a detail of another variation of the engraving of the core **41a** where the channels **46** of the core that forms the side walls of the filter, have all of them parallel walls to each other. The core remains still and is engraved with vertical motion of the characteristic tool where, if it is single, it moves one step at a time, or if it is multiple with one and only vertical motion.

**Fig.16** illustrates another variation where the core is dividable and is comprised by two parts **41b** & **41c.**

In general a vast number of variations and combinations are possible since, due to the axial pulling of the core **41,** all of the forms "Δ" are ejectable as long as they are developed straight and parallel to the direction of the pulling. It should be noted that the linear emitters of the state of the art do not have a core, and for this reason "Δ" forms are impossible to be ejected.

The surface of the concave filter, is obviously larger in comparison to the corresponding surface of the flat filter, regardless of it either developing into a linear (i.e. **Fig.11**), or developing into a cylindrical emitter (i.e. **Fig.9**).

This of course holds under the prerequisite that the filters of the linear as well as that of the cylindrical ones which are compared have both the same width **B.**

The correlation between the surfaces of filters that could be developed at these particular surfaces corresponds exactly to the relation between the arc and the chord of a circle, where the length **E** of the arc is always larger than the chord **B** that it corresponds to.

Thus the concave filter is more advantageous, since the larger the available surface for the development of the collection channel **4** (and the filter by extension) into a small emitter, the better the result of the filtration and the life span of the emitter.

In addition, the development of the filter into a concave surface allows for a larger cross-section for the water to pass-through from the pipe, on either a linear or cylindrical emitter.

It is obvious that the new filter of the cylindrical emitter illustrates undeniable abilities not only of passive self-protection but passive self-cleaning as well since the motion of the water through the shallow channels is continuous independently if they are clean or covered by sediments.

The cylindrical emitter in general requires special attention due to: a) the heavy construction of both the emitter itself as well the dripline pipe which is extruded with thick wall thickness, since it is intended usually for multi-seasonal uses, b) the special and critical issues with the internal sediments in the meandering path. It is mandatory for certain precautions and safety measures to be considered, because it is not prudent to have to abandon early a thick and heavy pipe intended to operate for many years just because the emitters or their filter are clogged and decommissioned earlier.

The meandering paths of the figures are indicative and for illustration purposes only while in some case the shallow channels extend only towards one side (front or back) of the collection channel **4.**

## Claims

1. Cylindrical emitter (3) for irrigation welded into a pipe (2) with screen type water filter and meandering path, **characterised in that** said filter bearing a collection channel (4) developed at an arc of a large length peripherally on the concave internal surface of the emitter and a plurality of consecutive orthogonal openings (5), wherein the orthogonal openings (5) are formed between consecutive side walls (11) of a plurality of shallow channels (12) and the side walls of the collection channel (4), said shallow channels (12) crossing the collection channel (4) perpendicularly and extending to a considerable length from both sides of it, where the length (L) of the shallow channels (12) is considerably larger than the width of the collection channel (4), where every opening (5) corresponds to a shallow channel (12), where all the shallow channels are parallel to each other having the direction of flow of the water (14).

2. Cylindrical emitter (3) for irrigation welded into a pipe (2) with water filter according to claim 1, where the cross-section of the shallow channels (12) has trapezoidal form.

3. Cylindrical emitter (3) for irrigation welded into a pipe (2) with water filter according to claims 1,2 where the side walls (11) of the channels (12) are raised in relation to the internal concave surface of the emitter and open to both ends.

4. Cylindrical emitter (3) for irrigation welded into a pipe (2) with water filter according to claims 1,2,3 where the collection channels (4) of the filter are more than one.

5. Cylindrical emitter (3) for irrigation welded into a pipe (2) with water filter according to claims 1,2,3,4 where the length (L) of the shallow channels (12) of the filter is limited.

6. Cylindrical emitter (3) for irrigation welded into a pipe (2) with water filter according to claims 1,2,3,4,5 where the surface of the filter develops over the surface or and at the side walls of a part of the emitter of significant width (20), which part is raised in relation to the remaining inner concave surface of the emitter.

7. Cylindrical emitter (3) for irrigation welded into a pipe (2) with water filter according to claims 1,2,3,4,5,6, where the side walls (11) of the shallow channels (12c) over the openings (5c) are cut off.

8. Method for the formation of a filter in a cylindrical emitter according to claim 1, wherein a mold of the cylindrical emitters is comprised of three main parts: two plates (40a, 40b), fixable and movable respectively, for engraving the outer cylindrical surface of the emitter (3), and an internal core (41) that forms the internal concave surface of the emitter, wherein the engraving for the forming of the filter is being done by engravings (47, 47a) onto the convex surface of the core.

9. Method for the formation of a filter in a cylindrical emitter according to claim 8, wherein the longitudinal channels (45) which forms the shallow channels (12) are formed by a cutting tool with parallel side walls which is orientated as such as for every channel (45) the engraving to be aligned to the radius of the core (41) which is rotating gradually and as needed before the next engraving process.

10. Method for the formation of a filter in a cylindrical emitter according to claim 8, wherein the longitudinal channels (46) of the core (41a) are formed by an engraving tool with a cutting blade or parallel blades and where the core (41a) remains still during the engraving process and is engraved by a vertical motion of the engraving tool, where for the next engraving the tool moves as needed in parallel.

## Patentansprüche

1. Zylinderförmiger Tropfer (3) zur Bewässerung, mit Sieb Wasserfilter und mäanderförmigem kanalform der in das innere eines Rohres (2) geschweißt ist, **dadurch gekennzeichnet, dass** der Wasserfilter einen Sammelkanal (4) der auf einem Umfangsbogen von großer Länge auf der konkaven innere Oberfläche des Tropfers entwickelt ist und mehrere aufeinander folgende orthogonale Öffnungen (5) trägt, wobei die orthogonalen Öffnungen (5) zwischen aufeinanderfolgenden Seitenwänden (11) einer Vielzahl von flachen Kanälen (12) und den Seitenwänden des Sammelkanals (4) ausgebildet sind, wobei die flachen Kanäle (12) den Sammelkanal (4) senkrecht kreuzen und sich von beiden Seiten zu einer beträchtlichen Länge erstrecken, wobei die Länge (L) der flachen Kanäle (12) beträchtlich größer ist als die Breite des Sammelkanals (4), wobei jede Öffnung (5) einem flachen Kanal (12) entspricht, wobei alle flachen Kanäle parallel zueinander sind und die Strömungsrichtung des Wassers (14) aufweisen.

2. Zylinderförmiger Tropfer (3) zur Bewässerung, der in das innere eines Rohres (2) geschweißt ist nach Anspruch 1, wobei der Querschnitt der flachen Kanäle (12) trapezförmig ist.

3. Zylinderförmiger Tropfer (3) zur Bewässerung, geschweißt in das innere eines Rohres (2) mit Wasserfilter nach den Anspruechen 1 und 2 wobei die Seitenwände (11) der Kanäle (12) in Bezug auf die innere konkave Oberfläche des Tropfers angehoben und offen in beide Enden sind.

4. Zylinderförmiger Tropfer (3) zur Bewässerung, geschweißt in das innere eines Rohres (2) mit Wasserfilter nach den Anspruechen 1,2,3 wobei die Sammelkanäle (4) des Wasserfilters mehr als eins sind.

5. Zylinderförmiger Tropfer (3) zur Bewässerung, geschweißt in das innere eines Rohres (2) mit Wasserfilter nach den Anspruechen 1,2,3,4 wobei die Länge (L) der flachen Kanäle (12) des Filters begrenzt ist.

6. Zylinderförmiger Tropfer (3) zur Bewässerung, geschweißt in das innere eines Rohres (2) mit Wasserfilter nach den Anspruechen 1,2,3,4,5 wobei die Oberfläche des Wasserfilters über der Oberfläche oder und an den Seitenwänden eines Teils des Tropfers mit beträchtlicher Breite (20) sich entwickelt, wobei dieser Teil in Bezug auf die verbleibende innere konkave Oberfläche des Tropfers erhoben ist.

7. Zylinderförmiger Tropfer (3) zur Bewässerung, geschweißt in das innere eines Rohres (2) mit Wasserfilter nach den Anspruechen 1,2,3,4,5,6, wobei die Seitenwände (11) der flachen Kanäle (12c) über den Öffnungen (5c) abgeschnitten sind.

8. Verfahren zur Erzeugung eines Wasserfilters in einem zylindrischen Tropfer nach Anspruch 1, wobei eine Form der zylindrischen Tropfers aus drei Hauptteilen besteht: aus zwei Platten (40a, 40b), mit Fixierungs- bzw. Bewegungsfähigkeiten zum Gravieren der äußeren zylindrischen Oberfläche des Tropfers (3), und aus einem inneren Kern (41) der die innere konkave Oberfläche des Tropfers bildet, wobei die Gravur zum Formen des Wasserfilters durch die Gravuren (47, 47a) auf die konvexe Oberfläche des Kerns erfolgt.

9. Verfahren zur Erzeugung eines Wasserfilters in einem zylindrischen Tropfer nach Anspruch 8, wobei die Längskanäle (45), die die flachen Kanäle (12) bilden, durch ein Schneidwerkzeug mit parallelen Seitenwänden erfolgt, welches derart orientiert ist dass die Gravur für jeden Laengskanal (45) auf den Radius des Kerns (41) auszurichten ist, welcher Kern sich schrittweise und bedarfsgerecht, bevor die nächste Gravur gemacht wird, dreht.

10. Verfahren zur Erzeugung eines Wasserfilters in einem zylindrischen Tropfer nach Anspruch 8, wobei die Längskanäle (46) des Kerns (41a) durch ein Gravierwerkzeug mit einer Schneidklinge oder mit parallelen Klingen erzeugt sind und wobei der Kern (41a) während des Graviervorgangs stillsteht und durch eine vertikale Bewegung des Gravierwerkzeugs graviert wird, wo sich das Werkzeug für die nächste Gravur parallel nach Bedarf bewegt.

## Revendications

1. Emetteur cylindrique (3) pour l'irrigation incorporé dans un tube (2) avec un filtre à mailles a l'eau et chemin sinueux, avec la caractéristique que le filtre consiste en un canal collecteur (4) développé en arc de grande longueur périphérique sur le concave interne surface de l'émetteur, et une pluralité d'ouvertures orthogonales consécutives (5) lesquelles sont formées entre des parois latérales consécutives (11) d'une pluralité de canaux peu profonds (12) et des parois latérales du canal de collecte (4) lesdits canaux peu profonds (12) traversent le canal collecteur (4) perpendiculairement et s' étendent sur une longueur considérable des deux côtés du canal collecteur (4), la longueur (L) des canaux peu profonds (12) est considérablement plus grande que la largeur du canal collecteur (4), où chaque ouverture (5) correspond à un canal peu profond (12), où tous les canaux peu profonds sont parallèles entre eux ayant la direction de l'écoulement de l'eau (14).

2. Emetteur cylindrique (3) pour l'irrigation incorporé dans un tube (2) avec un filtre à l'eau selon la revendication 1, où la coupe transversale des canaux peu profonds (12) a une forme trapézoïdale.

3. Emetteur cylindrique (3) pour l'irrigation incorporé dans un tube (2) avec un filtre à l'eau selon les revendications 1,2 dans lequel les parois latérales (11) des canaux (12) sont soulevés par rapport à la surface concave interne de l'émetteur et ouverts aux deux extrémités.

4. Emetteur cylindrique (3) pour l'irrigation incorporé dans un tube (2) avec un filtre à l'eau selon les revendications 1,2,3 dans lequel les canaux de collecte (4) du filtre sont plus d'un.

5. Emetteur cylindrique (3) pour l'irrigation incorporé dans un tube (2) avec un filtre à l'eau selon les revendications 1,2,3,4, où la longueur (L) des canaux peu profonds (12) du filtre est limitée.

6. Emetteur cylindrique (3) pour l'irrigation incorporé dans un tube (2) avec un filtre à l'eau selon les revendications 1,2,3,4,5 où la surface du filtre se développe sur la surface ou et au niveau des parois latérales d'une partie de l'émetteur de largeur importante (20), laquelle partie est surélevée par rapport à la surface concave intérieure restante de l'émetteur.

7. Emetteur cylindrique (3) pour l'irrigation incorporé dans un tube (2) avec un filtre à l'eau selon les revendications 1,2,3,4,5,6, où les parois latérales (11) des canaux peu profonds (12c) sont coupées en dessus des ouvertures (5c).

8. Méthode de formation d'un filtre dans un émetteur cylindrique selon la revendication 1, dans lequel un moule des émetteurs cylindriques est constitué de trois parties principales: deux plaques (40a, 40b), respectivement fixables et mobiles, pour graver la surface externe cylindrique de l'émetteur (3), et un noyau interne (41) qui forme la surface interne concave de l'émetteur, où la gravure pour former le filtre est réalisée par des gravures (47, 47a) sur la surface convexe du noyau de 1 'émetteur.

9. Méthode de formation d'un filtre dans un émetteur cylindrique selon la revendication 8, où les canaux longitudinaux (45) qui forment les canaux peu profonds (12) sont formés par un outil de coupe à parois latérales parallèles lequel est orienté de façon que pour chaque canal (45) la gravure soit alignée sur le rayon du noyau (41) qui tourne progressivement et selon les besoins avant le processus de gravure suivant.

10. Méthode de formation d'un filtre dans un émetteur cylindrique selon la revendication 8, où les canaux longitudinaux (46) du noyau interne (41a) sont formés par un outil de gravure à lame de coupe ou à lames parallèles et où le noyau interne (41a) reste immobile pendant le processus de gravure et est gravée par un mouvement vertical de l'outil de gravure, où pour la gravure suivante, l'outil se déplace en parallèle comme requis.
